# EUROPÄISCHE PATENTSCHRIFT

(11) **EP 1 570 732 B1**
(45) Veröffentlichungstag und Bekanntmachung des Hinweises auf die Patenterteilung: **10.12.2008**
(21) Anmeldenummer: 05004411.4
(22) Anmeldetag: 01.03.2005
(51) Int. Cl.: A01K 31/22

(54) **Voliere zur Haltung von Geflügel**
Aviary for rearing poultry
Volière pour l'élevage des volailles

(30) Priorität: 02.03.2004 DE 202004003194 U
(43) Veröffentlichungstag der Anmeldung: 07.09.2005
(73) Patentinhaber: Big Dutchman International GmbH, 49377 Vechta (DE)
(72) Erfinder: Meerpohl, Bernd, 49377 Vechta-Calveslage (DE)
(74) Vertreter: Eisenführ, Speiser & Partner

(56) Entgegenhaltungen:
- CH-A5- 665 749
- CH-A5- 670 032
- RAUCH H W: "NEUE HALTUNGSFORMEN FUER LEGEHENNEN" LANDTECHNIK, LANDWIRTSCHAFTSVERLAG,MUNSTER, DE, Bd. 46, Nr. 5, 1. Mai 1991 (1991-05-01), Seiten 232-234, XP000203197 ISSN: 0023-8082
- BORCHERT K-L: "EIN 2-ETAGEN-LAUFSTALL FUER LEGEHENNEN" LANDTECHNIK, LANDWIRTSCHAFTSVERLAG,MUNSTER, DE, Bd. 40, Nr. 6, Juni 1985 (1985-06), Seiten 267-269, XP002065271 ISSN: 0023-8082

## Beschreibung

Die Erfindung betrifft eine Voliere zur Haltung von Geflügel, wobei die Voliere mehrere derart miteinander verbundene Etagen für den Aufenthalt der Tiere aufweist, dass sich jedes Tier frei über alle diese Etagen bewegen kann.

Für die Haltung von Geflügel, insbesondere Legehennen, sind bspw. aus DE 203 07 110 U1 Volieren mit mehreren Etagen bekannt. Derartige Volieren werden herkömmlicherweise in einem Stall oder einer Halle untergebracht. Diese bekannten Volieren sind als offene Systeme ausgebildet, so dass sich die Tiere nicht nur innerhalb der Etagen der Voliere, sondern auch im Stall bzw. der Halle frei bewegen können.

Diese Art der Geflügelhaltung ist jedoch insofern nachteilig, als die Tiere freien Kontakt mit den raumumschließenden Flächen des Stalles bzw. der Halle haben und diese Flächen verschmutzen, u.a. mit Kot.

Die Reinigung dieser Flächen ist jedoch aufwändig, insbesondere da sie nur dann durchgeführt werden kann, wenn die Tiere sich nicht innerhalb des Stalles bzw. der Halle befinden.

Der Erfindung liegt daher die Aufgabe zugrunde, eine Voliere der eingangs genannten Art derart weiterzubilden, dass ein Kontakt der Tiere mit den raumumschließenden Flächen des Stalles bzw. der Halle vermieden werden kann.

Die Erfindung löst diese Aufgabe dadurch, dass bei einer Voliere der eingangs genannten Art an den seitlichen Rändern der Etagen angeordnete Wandelemente und ein oder mehrere an der obersten Etage angeordnete Deckenelemente die Voliere derart verschließen, dass die Tiere die Voliere nicht selbständig verlassen können.

Die Erfindung stellt somit eine geschlossene Voliere bereit, bei der sich die Tiere nicht beliebig im Stall bzw. der Halle bewegen können und insbesondere ein Kontakt mit den raumumschließenden Flächen des Stalles bzw. der Halle vermieden wird.

Gleichwohl ist eine freie Beweglichkeit der Tiere sowohl in horizontaler als auch in vertikaler Richtung innerhalb der Voliere gewährleistet, so dass eine artgerechte Haltung, insbesondere mit ausreichender Bewegung der Tiere möglich ist.

Bei einer bevorzugten Ausführungsform weist die Voliere eine Gruppe von Aktivitätszonen für unterschiedliche Aktivitäten der Tiere auf, insbesondere eine Versorgungszone zur Futter- und/oder Flüssigkeitsaufnahme, eine Ruhezone, eine Legezone mit Legenestern und eine Scharrzone mit einer Scharrfläche zur Aufnahme von Einstreumaterial. Diese Aktivitätszonen sind jedoch derart angeordnet, dass jede Etage nur eine Aktivitätszone oder nur einen Teil der Aktivitätszone dieser Gruppe von Aktivitätszonen aufweist. Hierdurch wird auf vorteilhafte Weise erreicht, dass die Tiere sich über die verschiedenen Etagen bewegen müssen, um unterschiedliche Aktivitäten wie Fressen und Trinken, Schlafen und Ruhen, Legen von Eiern oder Scharren ausüben zu können.

Bei einer besonderen Ausführungsform weist die oberste Etage eine Legezone auf. Die oberste Etage empfinden die Tiere als besonders geschützt, da keine anderen Tiere oberhalb dieser obersten Etage umherlaufen. Die Legezone in der obersten Etage wird daher von den Tieren besonders gerne angenommen. Der Anteil verlegter Eier, das heißt nicht in der Legezone abgelegte Eier, kann daher auf vorteilhafte Weise reduziert werden.

Bei einer weiteren besonderen Ausführungsform ist eine Etage nur als Scharrzone ausgebildet. Vorzugsweise handelt es sich hierbei um die unterste Etage. Auf diese Weise kann das für Unruhe sorgende Scharren der Tiere auf einen Bereich der Voliere konzentriert werden und zwar insbesondere auf einen Bereich, der möglichst weit von der Legezone entfernt ist.

Bei einer weiteren Ausführungsform weist jede Etage, die keine Scharrzone aufweist, eine Versorgungszone auf. Hierdurch wird sichergestellt, dass die Tiere in diesen Etagen ausreichend mit Futter und Wasser versorgt werden können.

Bei einer weiteren Ausführungsform weist jede Etage, die keine Scharrzone aufweist, über Kotbändern angeordnete Kotroste auf. Auf diese Weise kann der durch die Kotroste fallende Kot der Tiere kontinuierlich ausgetragen werden. Mit dieser Ausbildung von Kotbändern und Kotrosten in allen Etagen ohne Scharrzone erreicht man eine sehr gute Hygiene innerhalb der Voliere.

Bei einer weiteren Ausführungsform sind die Kotroste mit einer Neigung zu einem oder zu beiden seitlichen Etagenrändern angeordnet und ferner Schutzeinrichtungen für verlegte Eier an den seitlichen Etagenrändern zum Schutz dieser Eier vor einer Beschädigung durch die Tiere vorgesehen. Durch diese Maßnahme erreicht man, dass auch verlegte Eier gezielt aus dem Bewegungsbereich der Tiere entfernt werden können, so dass auch verlegte Eier unbeschädigt ihrer Bestimmung, d.h. Verkauf oder Weiterverarbeitung, zugeführt werden können.

Bei einer weiteren besonderen Ausführungsform weist wenigstens ein Teil der Etagen Böden mit wenigstens einer Bodenöffnung zur Verbindung der Etage miteinander auf. Durch diese Bodenöffnungen können die Tiere von einer Etage in die nächste gelangen, ohne dabei die Voliere verlassen zu müssen - was gerade durch die allseits geschlossene Voliere vermieden wird.

Vorzugsweise sind diese Bodenöffnungen benachbarter (das heißt unmittelbar übereinander angeordneter) Etagen jeweils horizontal zueinander versetzt angeordnet. Hierdurch erzwingt man einen möglichst langen Weg von der untersten Ebene in die oberste Ebene der Voliere und kann somit die Bewegungsaktivität der Tiere steigern.

Bei einer alternativen Ausführungsform sind die Bodenöffnungen aller derjenigen Etagen, die Bodenöffnungen aufweisen, im wesentlichen senkrecht übereinander angeordnet. Mit anderen Worten liegen damit die entsprechenden Bodenöffnungen untereinander und bilden ein durchgehendes "Treppenhaus", d.h. eine Einrichtung, innerhalb derer die Tiere sich zwischen den Etagen bewegen können. Diese Anordnung hat gegenüber der vorstehend genannten Ausführungsform mit jeweils horizontal zueinander versetzt angeordneten Bodenöffnungen benachbarter Etagen, die somit eine Art wechselndes "Treppenhaus" bilden, den Vorteil, dass der Weg der Tiere beim Wechsel des Standortes über mehrere Etagen kürzer ist und daher die sich auf den Etagen aufhaltenden Tiere nicht durch die den Standort wechselnden Tiere gestört werden. Insgesamt erreicht man hierdurch ruhigere Zonen für die Tiere, die somit stressfreier untergebracht sind. Diese Art des kürzeren und ungestörteren Weges zum Legenest bringt den Vorteil mit sich, dass die Tiere weniger Eier verlegen. Durch eine reduzierte Anzahl verlegter Eier kann die Ausbeute der Voliere erhöht werden. Ferner fällt Kot der Tiere, die sich innerhalb dieser Öffnungen befinden, bis auf die unterste Etage. Somit werden die oberen Etagen weniger mit Kot belastet.

Bei einer weiteren alternativen Ausführungsform sind Bodenöffnungen von unmittelbar übereinander angeordneten Etagen teilweise horizontal zueinander versetzt und teilweise im wesentlichen senkrecht übereinander angeordnet. Typischerweise sind (i) zumindest zwei unmittelbar übereinander angeordnete Etagen vorgesehen, deren Bodenöffnungen horizontal zueinander versetzt angeordnet sind und (ii) zwei oder mehr unmittelbar übereinander angeordnete Etagen vorgesehen, deren Bodenöffnungen im wesentlichen senkrecht übereinander angeordnet sind. Besonders vorteilhafterweise sind die beiden untersten Bodenöffnungen zueinander versetzt angeordnet, während alle weiteren Bodenöffnungen übereinander angeordnet sind. Eine derartige Anordnung hat den Vorteil, dass die unten liegende Scharrzone nur gering mit von oben herabfallendem Kot belastet wird, da der Kot, der von Tieren der oberen Etagen stammt, von dem Kotband der zweituntersten Etage aufgefangen wird.

Bei einer weiteren bevorzugten Ausführungsform weist die Voliere Mittel zur Aufnahme von Trennwandelementen innerhalb der Etagen auf. Auf diese Weise kann die Beweglichkeit der Tiere in Längsrichtung der Voliere eingeschränkt werden, soweit dies erforderlich ist. Eine derartige Einschränkung der Beweglichkeit der Tiere ist insbesondere sinnvoll, um einzelne Segmente der Voliere ggf. vorübergehend für die Tiere abzusperren, um bspw. Wartungs- oder Reparaturmaßnahmen durchzuführen.

Weitere bevorzugte Ausführungsformen ergeben sich aus den Unteransprüchen sowie aus den in der Zeichnung gezeigten Ausführungsbeispielen. In der Zeichnung zeigt:
- Fig. 1: eine seitliche Schnittansicht eines ersten Ausführungsbeispiels einer erfindungsgemäßen Voliere,
- Fig. 2: eine seitliche Schnittansicht eines zweiten Ausführungsbeispiels einer erfindungsgemäßen Voliere,
- Fig. 3: eine seitliche Schnittansicht eines dritten Ausführungsbeispiels einer erfindungsgemäßen Voliere,
- Fig. 4: eine seitliche Schnittansicht eines vierten Ausführungsbeispiels einer erfindungsgemäßen Voliere,
- Fig. 5: seitliche Schnittansichten dreier Ausführungsbeispiele zur Veranschaulichung unterschiedlicher Ausführungsformen des sogenannten Treppenhauses und
- Fig. 6: eine seitliche Schnittansicht eines weiteren Ausführungsbeispiels einer erfindungsgemäßen Voliere.

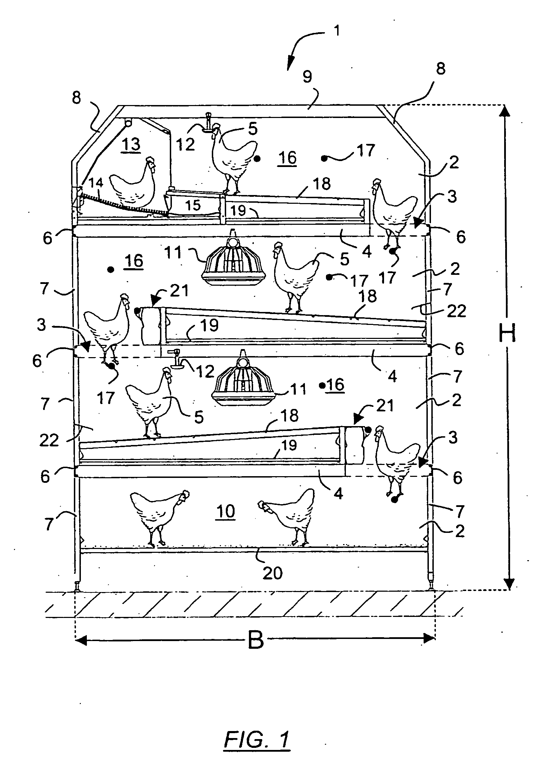

Fig. 1 zeigt eine Voliere 1 mit mehreren, nämlich vier, Etagen 2. Bei anderen (nicht dargestellten) Ausführungsbeispielen sind mehr bzw. weniger Etagen vorgesehen.

Diese Etagen 2 sind über Öffnungen 3 in den jeweiligen Etagenböden 4, mit Ausnahme der untersten Etage, verbunden, so dass Geflügel 5, insbesondere Legehennen, von einer Etage 2 in die jeweils benachbarte Etage gelangen kann. Die Öffnungen 3 in den Etageböden 4 benachbarter Etagen 2 sind jeweils horizontal zueinander versetzt.

Die äußeren Ränder 6 der Etagen 2 sind senkrecht übereinander angeordnet. Diesen Etagenränder 6 sind mit Wandelementen 7 verbunden, die entweder als senkrecht stehende Wandelemente oder als wenigstens teilweise schrägstehende Wandelemente 8 ausgebildet sind. An den Wandelementen 8 der obersten Etage 2 ist ein Deckenelement 9 angebracht. Die Wandelemente 7, 8 sowie das Deckenelement 9 umschließen die Voliere 1, so dass die Tiere 5 die Voliere nicht selbständig verlassen können. Diese Wandelemente 7, 8 und/oder das Deckenelement 9 sind bspw. als Gitter oder als senkrecht oder waagerecht ausgerichtete Streben ausgebildet.

Auf diese Weise wird eine geschlossene Voliere 1 bereitgestellt, die es verhindert, dass die Tiere 5 innerhalb des umgebenden Stallraumes herumlaufen bzw. -flattern.

Die unterste Etage 2 ist als eine sog. Scharrzone 10 mit einer Scharrfläche ausgestaltet, auf der verformbares Einstreumaterial eingestreut ist. In den darüber liegenden Etagen 2 befinden sich jeweils Versorgungszonen mit Fütterungseinrichtungen, z.B. in Form von Futterschalen 11, und Tränkeinrichtungen 12. In der obersten Etage 2 befindet sich ferner eine Legezone 13 mit Legenestern, in denen die Tiere Eier legen können. Die in dieser Legezone 13 gelegten Eier gelangen über eine geneigte Fläche 14 in einen Eierkanal 15, der ein Förderband aufweist, mittels dessen Eier zu einer Sammelstelle gefördert werden.

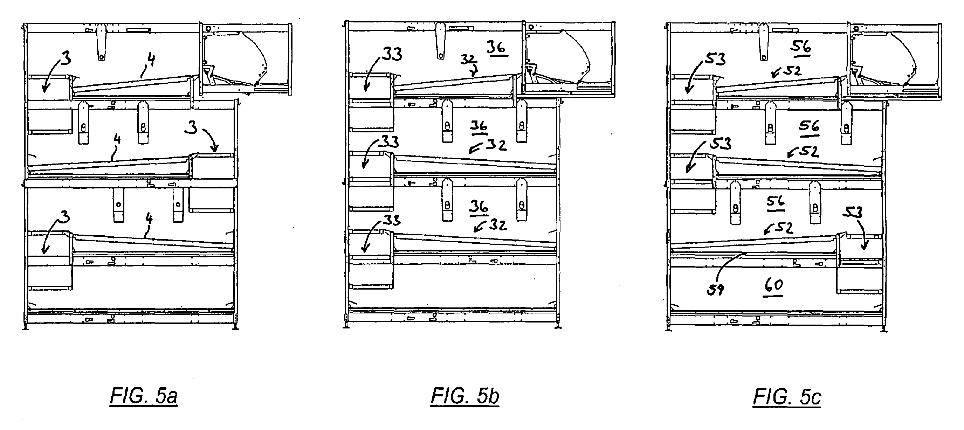

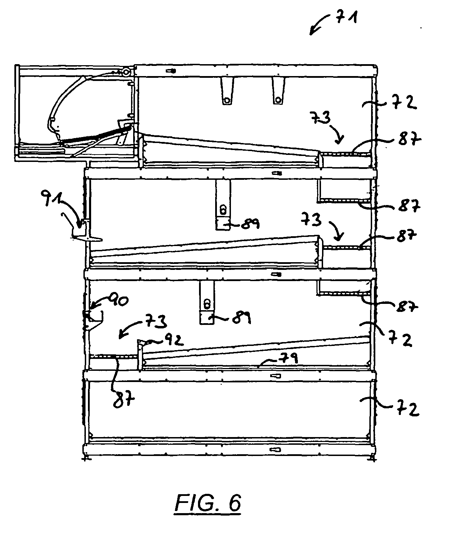

Ferner weisen die oberhalb der untersten Etage liegenden Etagen 2 Ruhezonen 16 im Bereich von Sitzstangen 17 auf. Die Sitzstangen 17 sind entweder in Längsrichtung der Voliere 1 ausgerichtet, wie in Fig. 1 dargestellt. Alternativ sind sie jedoch zumindest im Bereich der Bodenöffnungen 3 quer zur Volierenlängsrichtung ausgerichtet. Diese Orientierung der Sitzstangen hat den Vorteil, dass die Tiere diese quer zur Volierenlängsrichtung orientierten Stangen als Steighilfen beim Auf- oder Abstieg von einer Etage zur benachbarten Etage verwenden können. Diese Art der Anbringung der Sitzstangen ist in den Fig. 5 und 6 dargestellt, auf die unten näher eingegangen wird.

In den oberen Etagen der in Fig. 1 dargestellten Voliere 1 befindet sich jeweils eine von Rosten 18 gebildete Nutzfläche. Unterhalb dieser Roste 18 befinden sich Kotbänder 19 zum Auffangen des durch die Roste 18 hinunterfallenden Kots der Tiere 5. Diese Kotbänder 19 fördern den aufgefangenen Kot zu einer Sammelstelle, wo der Kot vom Kotband 18 entfernt wird.

Die unterste Etage 2 weist ebenfalls ein Kotband 20 auf, so dass auch Verunreinigungen der Scharrzone 10 beseitigt werden können und das Einstreumaterial ausgewechselt werden kann.

Die Kotbänder 19 werden durch Kotbandbelüftungseinrichtungen 21 belüftet, um den Kot durch Feuchtigkeitsentziehung zu trocknen und Frischluft zuzuführen. Die Trocknung des Kots ist insbesondere deshalb vorteilhaft, da die durch feuchten Kot verursachte Entstehung von Ammoniak im Zuge der Trocknung reduziert wird.

Die Kotroste 18 sind jeweils geneigt angeordnet, so dass verlegte Eier zur Seite rollen. An den äußeren unteren Enden dieser geneigten Roste 18 befinden sich Schutzeinrichtungen 22, bspw. Schutzbleche, die verhindern, dass die Tiere 5 die nach außen gerollten verlegten Eier beschädigen. Die seitlich unter die Schutzeinrichtungen 22 gerollten, verlegten Eier können manuell oder mechanisiert abgesammelt werden.

Die Voliere 1 ist somit insgesamt als ein geschlossenes System mit einer definierten Breite B von ca. 1,50 m bis 2.00 m sowie einer Höhe H von ca. 2.00 m bis 3.00 m ausgebildet. Die Länge der Voliere ist variabel aufgrund eines segmentweisen Aufbaus der Voliere. Entlang der Längsausdehnung der Voliere 1 sind (nicht dargestellte) Mittel zur Aufnahme von senkrecht über die Breite B der Voliere einzubringende Trennwandelemente voneinander abzutrennen. Hierdurch kann die Bewegungsfreiheit der Tiere 5 vorübergehend oder dauerhaft eingeschränkt werden. Im übrigen haben die Tiere 5 jedoch freie Beweglichkeit in horizontaler wie vertikaler Richtung bis zu den äußeren Begrenzungen der Voliere 1, insbesondere können die Tiere sich jedoch nach Belieben in einer der Ebenen 2 aufhalten.

Die Voliere 1 weist ferner (nicht dargestellte) Beleuchtungseinrichtungen auf, so dass die Tiere 5 auch im geschlossenen fensterlosen oder fensterarmen Hallen bzw. Ställen gehalten werden können.

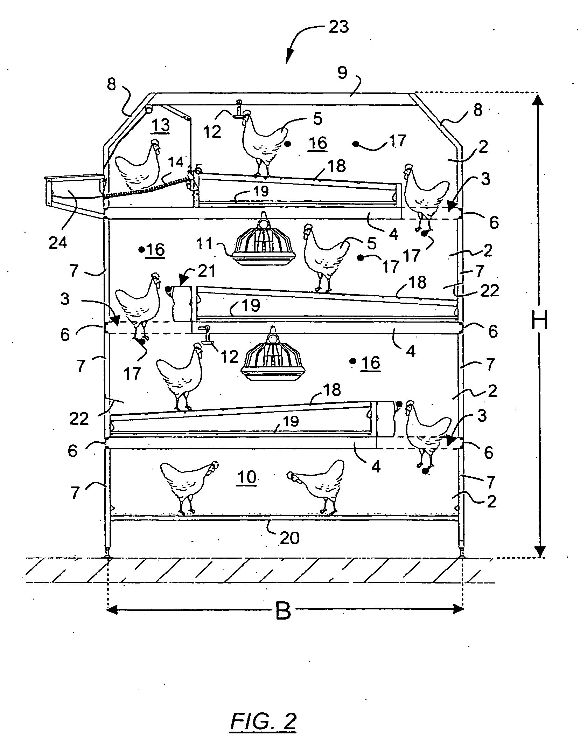

Fig. 2 zeigt ein weiteres Ausführungsbeispiel einer Voliere 23. Diese Voliere 23 unterscheidet sich nur geringfügig von der in Fig. 1 dargestellten Voliere 1. Soweit in Fig. 2 gleiche Bezugsziffern eingezeichnet sind, wird auf die vorstehende Beschreibung zu Fig. 1 verwiesen.

Die Voliere 23 gemäß Fig. 2 unterscheidet sich jedoch in der Ausgestaltung der obersten Etage und zwar im Hinblick auf die Anordnung des Eierkanals, der in Fig. 1 als Eierkanal 15 zwischen der Legezone 13 und dem Rost 18 dargestellt ist. In Fig. 2 ist statt des Eierkanals 15 ein Eierkanal 24 vorgesehen, der sich auf der Außenseite der Voliere 1 befindet. Diese Ausführung hat den Vorteil, dass der Eierkanal 24 leichter zugänglich ist, sollten Wartungs- oder Reparaturarbeiten an dem Eierkanal 24 vorgenommen werden müssen.

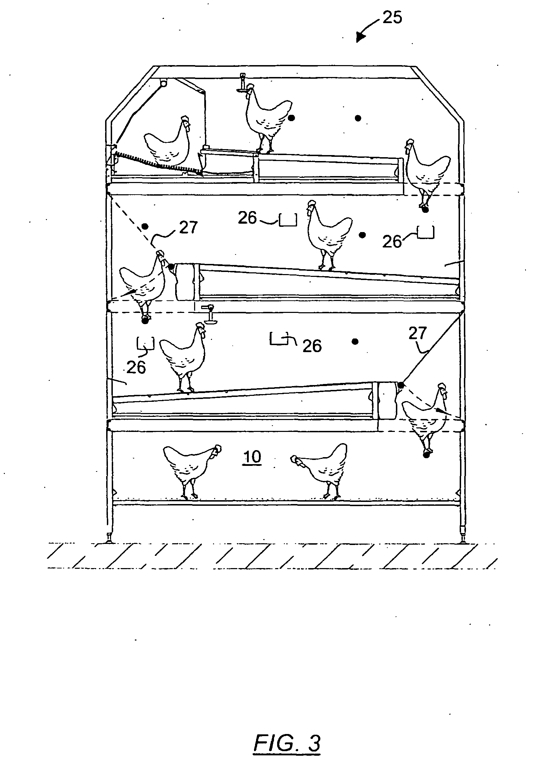

Fig. 3 zeigt ein weiteres Ausführungsbeispiel einer Voliere 25. Diese Voliere 25 entspricht der in Fig. 1 dargestellten Voliere 1 mit den folgenden Ausnahmen: Die in Fig. 1 in Form von Futterschalen 11 dargestellten Fütterungseinrichtungen sind in Fig. 3 durch Kettenfütterungseinrichtungen 26 ausgebildet. Jede dieser Kettenfütterungseinrichtungen weist einen Futterbehälter zur Bevorratung von Futter auf. Unterhalb eines derartigen Futterbehälters verlaufen eine oder mehrere Futterbahnen. Innerhalb dieser Futterbahnen werden von einem Antriebsmotor angetriebene Futterketten geführt, die für eine Verteilung des aus dem Futterbehälters stammenden Futters entlang der Futterbahnen sorgen.

Ferner unterscheidet sich die in Fig. 3 gezeigte Voliere 25 von der in Fig. 1 gezeigten Voliere 1 durch eine spezielle Ausbildung eines Teils der seitlichen Wandelemente. Diese sind nämlich bei der Voliere 25 aus Fig. 3 teilweise als klappbare Wandelemente 27 ausgebildet und zwar derart, dass durch ein Verschwenken eines seitlichen Wandelements 27 zwei benachbarte Etagen voneinander abgesperrt werden können. Insbesondere wird eine derartige Absperrung an dem Wandelement im Bereich der Öffnung zwischen der Scharrzone 10 und der darüberliegenden Etage vorgesehen. Alternativ oder zusätzlich können derartige schwenkbare Klappen 27 auch im Bereich der Bodenöffnungen 3 zwei anderer Etagen vorgesehen sein.

Durch diese Klappen 27 kann bei Bedarf ein Wechsel der Tiere 5 zwischen den entsprechenden Ebenen eingeschränkt oder unterbunden werden. Dies ist insbesondere vorteilhaft, um bei der Einstallung von Jungtieren (Junghennen) die Tiere leichter an die Versorgungseinrichtungen zu gewöhnen. Beispielsweise kann durch ein Absperren des Scharrraums 10 den Jungtieren schneller das Auffinden der in den übrigen Etagen vorgesehenen Versorgungseinrichtungen beigebracht werden.

Ferner kann eine derartige Absperrung vorteilhaft sein, um im Krankheitsfall die Tiere vom Einstreubereich bzw. der Scharrzone 10 abzusperren. Schließlich sind derartige Klappen auch vorteilhaft, um bei der Ausstallung der Tiere 5 das Fangen der Tiere 5 zu erleichtern.

Im übrigen entspricht die in Fig. 3 dargestellt Voliere 25 der in Fig. 1 dargestellten Voliere 1.

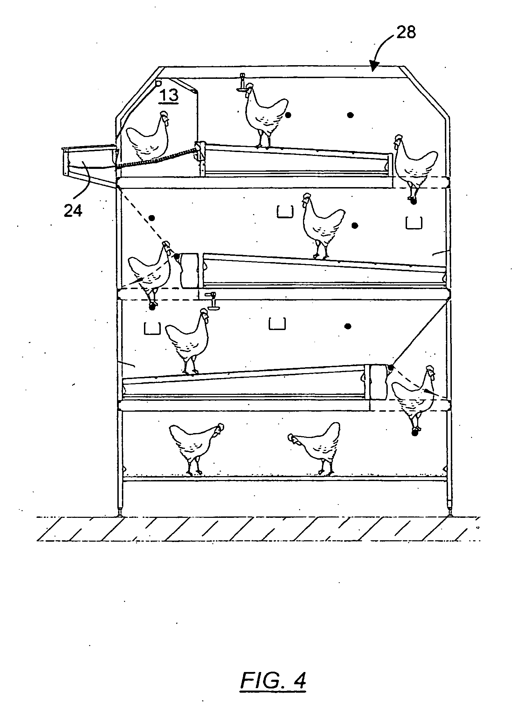

Fig. 4 zeigt ein weiteres Ausführungsbeispiel einer Voliere 28. Diese Voliere 28 entspricht der in Fig. 3 dargestellten Voliere 25 mit Ausnahme der Ausbildung der Legezone 13. Die Legezone 13 der in Fig. 4 dargestellten Voliere 28 entspricht nämlich der Legezone 13 gemäß der Voliere 23 aus Fig. 2. Das heißt der Eierkanal 24 befindet sich auf der Außenseite der Voliere 28. Im übrigen entspricht aber die Voliere 28 gemäß Fig. 4 der in Fig. 3 dargestellten Voliere 25.

Fig. 5 zeigt drei verschiedene Ausführungsformen des sog. Treppenhauses, d.h. des Bereiches, in dem die Tiere von einer Etage zur nächsten wechseln können:

Im einzelnen zeigt Fig. 5a eine Voliere mit einem zweifach wechselnden Treppenhaus, das insofern den in den Fig. 1 bis 4 gezeigten Volieren entspricht. Bei dieser Ausführungsform sind die Bodenöffnungen 3 benachbarter Etagenböden 4 jeweils horizontal zueinander versetzt.

Bei dem Ausführungsbeispiel gemäß Fig. 5b ist ein durchgehendes Treppenhaus dargestellt, d.h. ein Treppenhaus, bei dem die Bodenöffnungen 33 aller Etagenböden 32 im wesentlichen senkrecht übereinander angeordnet sind. Die Bereitstellung eines durchgehenden Treppenhauses verhindert, dass die Tiere beim Wechsel von einer Etage 32 zur nächsten, durch die Ruhezonen 36 hindurch müssen, so dass ihr Weg zum Legenest verkürzt ist.

Fig. 5c zeigt demgegenüber ein einfach wechselndes Treppenhaus, bei dem benachbarte Bodenöffnungen 53 jeweils benachbarter Etagenpaare 52 teilweise horizontal zueinander versetzt und teilweise im wesentlichen senkrecht übereinander angeordnet sind. Diese Anordnung der Bodenöffnungen 53 hat den Vorteil, dass Kot, der von Tieren hinabfällt, die sich im Treppenhaus auf der linken Seite aufhalten, auf das Kotband 59 der untersten Etage 52 mit Bodenöffnung 53 fällt und somit nicht in den Bereich der Scharrzone 60 hinunter fallen kann. Lediglich im Bereich der Bodenöffnung 53 der Etage 52, die unmittelbar oberhalb der Scharrzone 60 liegt, kann Kot von Tieren hinab in die Scharrzone 60 fallen. Dies ist jedoch im Vergleich zu Fig. 5b ein deutlich kleinerer Anteil. Die Scharrzone 60 kann somit relativ sauber gehalten werden. Insbesondere ist auch die Gefahr, dass Kot auf Tiere hinabfällt, gering, nämlich begrenzt auf den Bereich der unmittelbar oberhalb der Scharrzone 60 liegenden Bodenöffnung 53.

Fig. 6 zeigt eine weitere detaillierte seitliche Schnittansicht einer Voliere 71, die in ihrem grundsätzlichen Aufbau der Voliere gemäß Fig. 5c ähnlich ist, insbesondere ein nur einfach wechselndes Treppenhaus aufweist. Im Bereich der Bodenöffnungen 73 befinden sich jeweils eine oder mehrere Sitzstangen 87, die als Steighilfen für die Tiere dienen, die sich von einer Etage 72 in die darüber oder darunter liegende Etage bewegen wollen. Die Sitzstangen 87 sind - ebenso wie die in den Fig. 5a, b und c dargestellten Sitzstangen - quer zur Volierenlängsachse ausgerichtet, um den Tieren eine einfachere Passage durch die Bodenöffnungen 73 zu ermöglichen.

Statt Sitzstangen 87 können aber auch im Bereich der Bodenöffnungen 73 Gitter vorgesehen sein, die den Tieren als Steighilfen dienen. Derartige Gitter sind vorzugsweise geneigt angeordnet, um den Tieren den Auf- bzw. Abstieg von einer Etage zur nächsten zu erleichtern.

In Fig. 6 sind ferner Futtertröge 89, 90, 91 dargestellt, die teilweise als Futtertröge 89 im Inneren der Voliere 71, teilweise jedoch wandseitig als Futtertröge 90, 91 angeordnet sind. Die wandseitig angeordneten Futtertröge 90, 91 sind entweder innenliegend, nämlich als Futtertröge 90, oder außenliegend, nämlich als Futtertröge 91, angebracht. An diesem Futtertrog 91 ist ferner ein Abschirmblech vorgesehen, das verhindert, dass verlegte Eier von umherlaufenden Tieren beschädigt werden. Daher ist das Abschirmblech so groß gestaltet, dass es gerade zulässt, dass Eier unter es hinabrollen können und das Abschirmblech die entsprechenden Eier vollständig überdeckt.

Ferner sind in Fig. 6 als Profil ausgebildete Sitzstangen 92 (zur Ausgestaltung vergleiche EP 10 97 634 B1) im Bereich der Bodenöffnungen derart angeordnet, dass die Tiere sich an den Rand der betreffenden Bodenöffnung derart ausgerichtet hinsetzen, dass der Kopf des Tieres sich oberhalb der Bodenöffnung befindet, während das entsprechende Hinterteil des Tieres sich über dem jeweiligen Kotband 79 befindet. Auf diese Weise kann mittels der Neigung der Sitzstangen 92 eine Verschmutzung des jeweils unterhalb einer Bodenöffnung 87 liegenden Bereichs minimiert werden. Insbesondere ist die jeweilige Sitzstange 92 derart ausgerichtet, dass sie von der jeweiligen Öffnung 73 weg nach unten weisend ausgerichtet ist. Die Sitzstangen 92 haben zugleich die Funktion, als Abschirmblech für verlegte Eier zu dienen. Sie sind daher derart ausgebildet, dass verlegte Eier unter sie hinabrollen können und von ihnen verdeckt werden.

Die vorstehend erläuterten Merkmale sind in jeder der dargestellten Ausführungsformen einsetzbar, auch wenn sie nicht jeweils bei jeder Ausführungsform beschrieben sind, das gilt insbesondere für die als Profil ausgebildeten Sitzstangen, die Futtertröge sowie die sonstigen Sitzstangen und deren Ausrichtung und schließlich auch der erläuterten Gitter im Bereich der jeweiligen Bodenöffnungen.

Insgesamt stellt die erfindungsgemäße geschlossene Voliere sicher, dass die Tiere 5 sich immer innerhalb eines genau kontrollierten Raumes aufhalten. Sie gewährleistet ferner, dass die Tiere 5 keinen Kontakt mit den Wänden des Stalles bzw. der Halle, welche(r) die Voliere 1 beherbergt, haben. Hierdurch wird zum einen die Hygiene eines Stalles verbessert. Zum anderen erleichtert eine derart geschlossene Voliere auch Kontrollgänge der untergebrachten Tiere und vermeidet einen Kontakt der Aufsichtsperson mit den Tieren 5.

## Patentansprüche

1. Voliere zur Haltung von Geflügel (5), wobei die Voliere (1, 23) mehrere derart miteinander verbundene Etagen (2) für den Aufenthalt der Tiere (5) aufweist, dass sich jedes Tier (5) frei über alle diese Etagen (2) bewegen kann,
**dadurch gekennzeichnet, dass**
an den seitlichen Rändern (6) der Etagen (2) angeordnete Wandelemente (7, 8) und ein oder mehrere an der obersten Etage (2) angeordnete Deckenelemente (9) die Voliere (1, 23) derart verschließen, dass die Tiere (5) die Voliere (1, 23) nicht selbständig verlassen können.

2. Voliere nach Anspruch 1,
**dadurch gekennzeichnet, dass**
die Voliere (1, 23) eine Gruppe von Aktivitätszonen für verschiedene Aktivitäten der Tiere (5) umfasst, wobei jede Etage (2) nur eine Aktivitätszone (10-13, 16) oder nur einen Teil der Aktivitätszonen (10-13, 16) dieser Gruppe von Aktivitätszonen (10-13, 16) aufweist.

3. Voliere nach Anspruch 2
**dadurch gekennzeichnet, dass**
die Gruppe von Aktivitätszonen (10-13, 16) umfasst:
- wenigstens eine Versorgungszone (11, 12) zur Futter- und/oder Flüssigkeitsaufnahme,
- wenigstens eine Ruhezone (16),
- wenigstens eine Legezone (13) mit Legenestern und
- wenigstens eine Scharrzone (10) mit einer Scharrfläche zur Aufnahme von Einstreumaterial.

4. Voliere nach einem der vorhergehenden Ansprüche,
**dadurch gekennzeichnet, dass**
die oberste Etage (2) eine Legezone (13) aufweist.

5. Voliere nach einem der vorhergehenden Ansprüche,
**dadurch gekennzeichnet, dass** wenigstens eine Etage (2) nur als Scharrzone (10) ausgebildet ist.

6. Voliere nach einem der vorhergehenden Ansprüche,
**dadurch gekennzeichnet, dass**
die unterste Etage (2) als Scharrzone (10) ausgebildet ist.

7. Voliere nach einem der vorhergehenden Ansprüche,
**dadurch gekennzeichnet, dass**
jede Etage (2), die keine Scharrzone (10) aufweist, wenigstens eine Versorgungszone (11, 12) aufweist.

8. Voliere nach einem der vorhergehenden Ansprüche,
**dadurch gekennzeichnet, dass**
jede Etage (2), die keine Scharrzone (10) aufweist, über Kotbändern (19, 20) angeordnete Kotroste (18) aufweist.

9. Voliere nach Anspruch, 8,
**dadurch gekennzeichnet, dass**
die Kotroste (18) mit einer Neigung zu einem oder beiden seitlichen Etagenrändern (6) und Schutzeinrichtungen (22) für verlegte Eier an den seitlichen Etagenrändern (6) zum Schutz dieser Eier vor einer Beschädigung durch die Tiere (5) angeordnet sind.

10. Voliere nach einem der vorhergehenden Ansprüche,
**dadurch gekennzeichnet, dass**
die seitlichen Ränder (6) der Etagen (2) senkrecht übereinander angeordnet sind.

11. Voliere nach einem der vorhergehenden Ansprüche,
**dadurch gekennzeichnet, dass**
wenigstens ein Teil der Etagen (2) Böden (4) mit wenigstens einer Bodenöffnung (3) zur Verbindung der Etagen (2) miteinander aufweist.

12. Voliere nach Anspruch 11;
**dadurch gekennzeichnet, dass**
die Bodenöffnungen (3) benachbarter Etagen (2) jeweils horizontal zueinander versetzt angeordnet sind.

13. Voliere nach einem der Ansprüche 11 oder 12
**dadurch gekennzeichnet, dass** die Bodenöffnungen (33) aller Bodenöffnungen aufweisenden Etagen (32) im wesentlichen senkrecht übereinander angeordnet sind.

14. Voliere nach einem der Ansprüche 11 bis 13
**dadurch gekennzeichnet, dass** Bodenöffnungen (53) von unmittelbar übereinander angeordneten Etagen teilweise horizontal zueinander versetzt und teilweise im wesentlichen senkrecht übereinander angeordnet sind.

15. Voliere nach einem der vorhergehenden Ansprüche,
**gekennzeichnet durch**
Mittel zur Aufnahme von Trennwandelementen innerhalb der Etagen (2).

16. Voliere nach einem der vorhergehenden Ansprüche 11 bis 14
**dadurch gekennzeichnet, dass**
im Bereich einer oder mehrerer Bodenöffnungen (3) (jeweils) Mittel (27) zum Versperren der korrespondierenden Bodenöffnung (3) vorhanden sind.

17. Voliere nach Anspruch 16,
**dadurch gekennzeichnet, dass**
die Mittel zum Versperren durch eine schwenkbare Klappe (27) ausgebildet sind.

18. Voliere nach Anspruch 17,
**dadurch gekennzeichnet, dass**
die schwenkbare Klappe 27 ein seitliches Wandelement (7) oder ein Teil eines seitlichen Wandelements (7) ist.

19. Voliere nach einem der vorhergehenden Ansprüche,
**dadurch gekennzeichnet, dass**
innerhalb einer Versorgungszone Futtereinrichtungen vorgesehen sind, die vorzugsweise als Futterschalen (11) und/oder Kettenführungseinrichtungen (26) ausgebildet sind.

## Claims

1. Aviary for holding poultry (5), which aviary (1, 23) has several levels (2) for accommodating the animals (5) which are connected to one another so that every animal (5) is able to move freely through all these levels (2),
**characterised in that**
wall elements (7, 8) disposed at the side edges (6) of the levels (2) and one or more cover elements (9) disposed on the uppermost level (2) close the aviary (1, 23) so that the animals (5) are not able to leave the aviary (1, 23) of their own volition.

2. Aviary as claimed in claim 1,
**characterised in that**
the aviary (1, 23) has a group of activity zones for different activities of the animals (5), and every level (2) has only one activity zone (10-13, 16) or only some of the activity zones (10-13, 16) of this group of activity zones (10-13, 16).

3. Aviary as claimed in claim 2,
**characterised in that**
the group of activity zones (10-13, 16) comprises:
- at least one supply zone (11, 12) for accommodating feed and/or liquid,
- at least one rest zone (16),
- at least one laying zone (13) with laying nests and
- at least one scratching zone (10) with a scratching surface for accommodating litter material.

4. Aviary as claimed in one of the preceding claims,
**characterised in that**
the uppermost level (2) has a laying zone (13).

5. Aviary as claimed in one of the preceding claims,
**characterised in that**
at least one level (2) is designed as a scratching zone (10) only.

6. Aviary as claimed in one of the preceding claims,
**characterised in that**
the lowermost level (2) is designed as a scratching zone (10).

7. Aviary as claimed in one of the preceding claims,
**characterised in that**
every level (2) which does not have a scratching zone (10) has at least one supply zone (11, 12).

8. Aviary as claimed in one of the preceding claims,
**characterised in that**
every level (2) which does not have a scratching zone (10) has droppings perches (18) disposed above droppings belts (19, 20).

9. Aviary as claimed in claim 8,
**characterised in that**
the droppings perches (18) are disposed at an angle with respect to one or both side level edges (6) and protective mechanisms (22) for laid eggs are provided at the side level edges (6) to protect these eggs from damage by the animals (5).

10. Aviary as claimed in one of the preceding claims,
**characterised in that**
the side edges (6) of the levels (2) are disposed vertically one above the other.

11. Aviary as claimed in one of the preceding claims,
**characterised in that**
at least some of the levels (2) have floors (4) with at least one floor opening (3) to connect the levels (2) to one another.

12. Aviary as claimed in claim 11,
**characterised in that**
the floor openings (3) of adjacent levels (2) are each disposed horizontally offset from one another.

13. Aviary as claimed in one of claims 11 or 12,
**characterised in that**
the floor openings (33) of all levels (32) having floor openings are disposed essentially vertically one above the other.

14. Aviary as claimed in one of claims 11 to 13,
**characterised in that**
floor openings (53) of levels disposed directly one above the other are disposed some horizontally offset from one another and some essentially vertically one above the other.

15. Aviary as claimed in one of the preceding claims,
**characterised by**
means for accommodating partition wall elements within the levels (2).

16. Aviary as claimed in one of claims 11 to 14,
**characterised in that**
in the region of one or more floor openings (3), means (27) are (respectively) provided for locking the corresponding floor opening (3).

17. Aviary as claimed in claim 16,
**characterised in that**
the locking means are provided in the form of a pivotable flap (27).

18. Aviary as claimed in claim 17,
**characterised in that**
the pivotable flap 27 is a side wall element (7) or a part of a side wall element (7).

19. Aviary as claimed in one of the preceding claims,
**characterised in that**
feed facilities are provided inside a supply zone, preferably in the form of feed bowls (11) and/or chain guide mechanisms (26).

## Revendications

1. Poulailler pour l'élevage de volailles (5), ledit poulailler (1, 23) comportant plusieurs étages (2) pour y faire séjourner les animaux (5), lesquels sont reliés entre eux de telle sorte que chaque animal (5) peut se déplacer librement sur tous ces étages (2),
**caractérisé en ce que** des éléments de paroi (7, 8), montés sur les bords latéraux (6) des étages (2), et un ou plusieurs élément(s) de plafond (9), montés au niveau de l'étage (2) supérieur, ferment le poulailler (1, 23) de telle sorte que les animaux (5) ne peuvent pas quitter le poulailler (1, 23) par eux-mêmes.

2. Poulailler selon la revendication 1, **caractérisé en ce que** le poulailler (1, 23) comporte un groupe de zones d'activités pour différentes activités des animaux (5), chaque étage (2) comportant seulement une zone d'activés (10-13, 16) ou seulement une partie des zones d'activés (10-13, 16) de ce groupe de zones d'activés (10-13, 16).

3. Poulailler selon la revendication 2, **caractérisé en ce que** le groupe de zones d'activés (10-13, 16) comporte :
- au moins une zone d'alimentation (11, 12) destinée à recevoir la nourriture et/ou des liquides,
- au moins une zone de repos (16),
- au moins une zone de ponte (13) avec des pondoirs et
- au moins une zone de grattage (10) avec une surface à gratter, destinée à recevoir les matières à répandre.

4. Poulailler selon l'une quelconque des revendications précédentes, **caractérisé en ce que** l'étage (2) supérieur comporte une zone de ponte (13).

5. Poulailler selon l'une quelconque des revendications précédentes, **caractérisé en ce qu'**un étage (2) au moins est réalisé uniquement en tant que zone de grattage (10).

6. Poulailler selon l'une quelconque des revendications précédentes, **caractérisé en ce que** l'étage (2) inférieur est réalisé sous forme de zone de grattage (10).

7. Poulailler selon l'une quelconque des revendications précédentes, **caractérisé en ce que** chaque étage (2) ne comportant pas de zone de grattage (10) comporte au moins une zone d'alimentation (11, 12).

8. Poulailler selon l'une quelconque des revendications précédentes, **caractérisé en ce que** chaque étage (2) ne comportant pas de zone de grattage (10) comporte des grilles d'excréments (18), montées au-dessus de bandes d'évacuation d'excréments (19, 20).

9. Poulailler selon la revendication 8, **caractérisé en ce que** les grilles d'excréments (18) sont montées avec une inclinaison par rapport à un ou aux deux bords latéraux (6) des étages, et des dispositifs de protection (22) des oeufs pondus sont montés sur les bords latéraux (6) des étages, pour protéger ces oeufs contre tout endommagement par les animaux (5).

10. Poulailler selon l'une quelconque des revendications précédentes, **caractérisé en ce que** les bords latéraux (6) des étages (2) sont disposés verticalement les uns au-dessus des autres.

11. Poulailler selon l'une quelconque des revendications précédentes, **caractérisé en ce qu'**une partie au moins des étages (2) comporte des planchers (4) avec au moins une ouverture de plancher (3) pour relier les étages (2) entre eux.

12. Poulailler selon la revendication 11, **caractérisé en ce que** les ouvertures de plancher (3) d'étages (2) voisins sont disposées en étant respectivement décalées les unes par rapport aux autres dans le sens horizontal.

13. Poulailler selon la revendication 11 ou 12, **caractérisé en ce que** les ouvertures de plancher (33) de tous les étages (32) munis d'ouvertures de plancher sont disposées sensiblement verticalement les unes au-dessus des autres.

14. Poulailler selon l'une quelconque des revendications 11 à 13, **caractérisé en ce que** les ouvertures de plancher (53) des étages disposés directement les uns au-dessus des autres sont disposées en partie en étant décalées horizontalement les unes par rapport aux autres et en partie sensiblement verticalement les unes au-dessus des autres.

15. Poulailler selon l'une quelconque des revendications précédentes, **caractérisé par** des moyens destinés à recevoir des éléments de cloison à l'intérieur des étages (2).

16. Poulailler selon l'une quelconque des revendications 11 à 14, **caractérisé en ce que** dans la zone d'une ou de plusieurs ouvertures de plancher (3) sont prévus (respectivement) des moyens (27) pour obturer l'ouverture de plancher (3) correspondante.

17. Poulailler selon la revendication 16, **caractérisé en ce que** les moyens d'obturation sont formés par un volet (27) pivotant.

18. Poulailler selon la revendication 17, **caractérisé en ce que** le volet (27) pivotant est un élément de paroi (7) latéral ou une partie d'un élément de paroi (7) latéral.

19. Poulailler selon l'une quelconque des revendications précédentes, **caractérisé en ce qu'**à l'intérieur de la zone d'alimentation sont prévus des dispositifs pour la nourriture, qui sont réalisés de préférence sous forme de cuvettes de nourriture (11) et/ou sous forme de dispositifs avec guidage à chaîne (26).
